# EUROPEAN PATENT APPLICATION

(11) **EP 4 084 022 A1**
(43) Date of publication of application: **02.11.2022**
(21) Application number: 21204933.2
(22) Date of filing: 27.10.2021
(51) Int. Cl.: H01F 7/02, H01F 41/02, H01F 1/057

(54) **SEGMENTED MAGNET AND METHOD FOR MANUFACTURING THE SAME**

(30) Priority: 26.04.2021 KR 20210053625
(71) Applicant: Star Group Ind. Co., Ltd, Daegu 42714 (KR)
(72) Inventor: HA, Seok Jin, 18280 Hwaseong-si (KR); DO, Sang Hwa, 18280 Hwaseong-si (KR); KIM, Kyoung Bum, 18280 Hwaseong-si (KR); HONG, Nyeon Han, 18280 Hwaseong-si (KR); KONG, Koon Seung, 42706 Daegu (KR); KIM, Dong Hwan, 42004 Daegu (KR); LEE, Sang Hyub, 43019 Daegu (KR)
(74) Representative: Isarpatent

(57) **Abstract**

Disclosed is a segmented magnet which may adjust the application direction of a heavy rare earth element for grain boundary diffusion depending on the magnetization direction of the segmented magnet so as to simplify the manufacturing process of the segmented magnet while reducing eddy current loss, and a method for manufacturing the same. The method includes preparing a plurality of permanent magnet parent bodies having a constant magnetization direction, diffusing a diffusion material into the prepared permanent magnet parent bodies via a pair of planes thereof opposite each other and parallel to the magnetization direction along grain boundaries so as to form a pair of diffusing surfaces, preparing a permanent magnet assembly by stacking the permanent magnet parent bodies in a line such that the diffusing surfaces thereof face each other, and segmenting the permanent magnet assembly into a plurality of pieces along planes perpendicular to the magnetization direction.

## Description

### TECHNICAL FIELD

The present disclosure relates to a segmented magnet and a method for manufacturing the same, and more particularly to a segmented magnet which may adjust the application direction of a heavy rare earth element for grain boundary diffusion depending on the magnetization direction of the segmented magnet so as to simplify the manufacturing process of the segmented magnet while reducing eddy current loss, and a method for manufacturing the same.

### BACKGROUND

Permanent magnets are main parts used in rotors or stators of driving motors and, in general, ferrite magnets are mainly used now.

Recently, as the output and the RPM of driving motors for hybrid electric vehicles (HEVs) and electric vehicles (EVs) increase, NdFeB sintered magnets having magnetic properties, which are three to five times greater than the magnetic properties of the conventional ferrite magnets, tend to be used.

However, eddy current easily occurs in the NdFeB sintered magnets due to low specific resistance thereof because of characteristics of a material thereof, and thereby, the temperature of the NdFeB sintered magnets is raised.

The temperature rise of the NdFeB sintered magnets due to eddy current loss causes other additional problems, such as degradation of the magnetic properties of the NdFeB sintered magnets and irreversible demagnetization at a high temperature.

Therefore, in order to reduce eddy current loss, the specific resistance of the NdFeB sintered magnets must be increased, or a movement path of eddy current must be reduced through magnet segmentation.

Among methods for reducing eddy current loss, as a method for increasing the specific resistance of a magnet, a non-magnetic substance is added to the inside of the magnet and, when the non-magnetic substance is added to the inside of the magnet, the magnetic properties of the magnet may be degraded.

Therefore, research on segmented magnets acquired by magnet segmentation in order to reduce eddy current loss is underway. However, in the segmented magnet acquired by magnet segmentation, many processes and high costs are required to segment a whole magnet into a plurality of magnet segments and to bond the magnet segments.

Recently, in order to improve magnetic properties, grain boundary diffusion magnets in which a rare earth element is diffused along grain boundaries through the surfaces of the magnets are being mainly used, and segmented magnets using these grain boundary diffusion magnets are being manufactured.

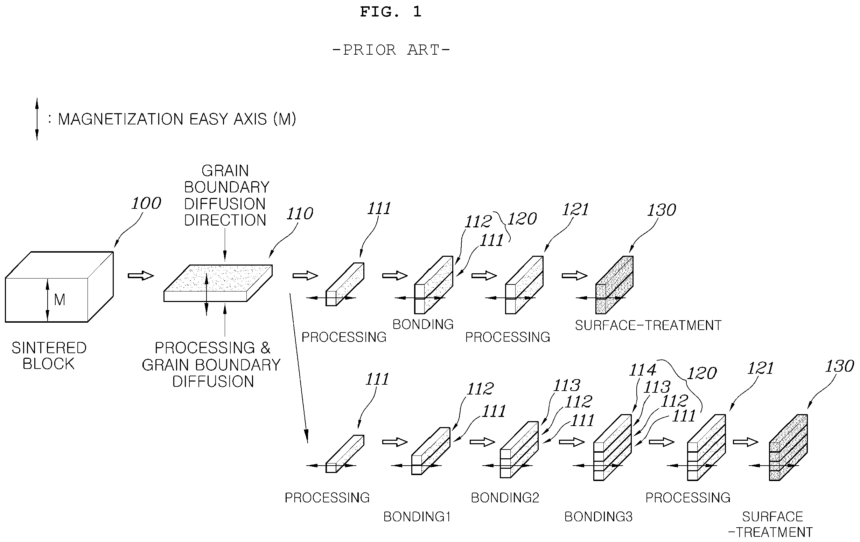

FIG. 1 is a view illustrating a conventional process for manufacturing a segmented magnet.

As shown in FIG. 1, in a conventional method for manufacturing a segmented magnet, a permanent magnet parent body 100 is prepared by compacting magnet powder while magnetizing the magnet powder so as to form a magnetization direction M along a magnetization easy axis and then sintering a magnet powder compact.

Thereafter, a diffusion material including a heavy rare earth element is applied to planes perpendicular to the magnetization direction M among the planes of the permanent magnet parent body 100, and then, the diffusion material is diffused into the permanent magnet parent body 100 along grain boundaries.

The permanent magnet parent body 100, into which the diffusion material is diffused along the grain boundaries, is segmented into plurality of permanent magnet segments 111, 112, 113 and 114 so as to fit into a desired magnet size, and then the permanent magnet segments 111, 112, 113 and 114 are bonded. Here, the permanent magnet parent body 100 is divided into the permanent magnet segments 111, 112, 113 and 114 along planes parallel with the magnetization direction M, and then the permanent magnet segments 111, 112, 113 and 114 are bonded.

In such processes of segmenting the permanent magnet parent body 100 into the permanent magnet segments 111, 112, 113 and 114 and bonding the permanent magnet segments 111, 112, 113 and 114, because the permanent magnet segments 111, 112, 113 and 114 are bonded after processing, when an n-segmented magnet 120 is provided, (n-1) processing and bonding processes are required.

Such an n-segmented magnet 120 acquired by processing and bonding is finally processed into a segmented magnet 121 so as to suit a desired purpose. The segmented magnet 121 is finally surface-treated, thereby producing a surface-treated segmented magnet 130.

Because the magnetic properties of a permanent magnet are improved as a diffusion material is diffused deeply into the inside of the permanent magnet, the magnetic properties of the segmented magnet 130 are improved as a distance between diffusing surfaces of each of the permanent magnet segments 111, 112, 113 and 114, to which the diffusion material is applied, is decreased. For this reason, as shown in FIG. 1, planes perpendicular to the magnetization direction M among the planes of the permanent magnet parent body 100 are formed as diffusing surfaces to which the diffusion material is applied and, if the segmented magnet 130 is manufactured through segmentation and bonding along planes parallel to the magnetization direction M, when the distance between the diffusing surfaces is reduced, a demagnetization field in the segmented magnet 130 is increased, and if the segmented magnet 130 is applied to a driving motor, an operating point is lowered and thus the segmented magnet 130 is weak to irreversible thermal demagnetization.

The above information disclosed in the Background section is only for enhancement of understanding of the background of the disclosure and should not be interpreted as conventional technology that is already known to those skilled in the art.

### SUMMARY

Therefore, the present disclosure has been made in view of the above problems, and it is an object of the present disclosure to provide a segmented magnet which may adjust the application direction of a heavy rare earth element for grain boundary diffusion depending on the orientation of the magnet so as to simplify the manufacturing process of the segmented magnet while reducing eddy current loss, and a method for manufacturing the same.

In accordance with the present disclosure, the above and other objects can be accomplished by the provision of a segmented magnet formed by stacking a plurality of permanent magnet segments in a line, wherein diffusing surfaces configured such that a diffusion material is diffused thereinto along grain boundaries are formed on a pair of planes of each of permanent magnet segments opposite each other and parallel to a magnetization direction, and the permanent magnet segments are stacked in the line and bonded such that the diffusing surfaces thereof face each other.

The segment magnet may be formed by cutting a permanent magnet assembly, acquired by stacking a plurality of permanent magnet parent bodies, each having the diffusing surfaces on a pair of planes thereof opposite each other and parallel to the magnetization direction, in a line such that the diffusing surfaces thereof face each other, along planes perpendicular to the magnetization direction.

A distance between a pair of the diffusing surfaces of each of the permanent magnet segments parallel to the magnetization direction may be shorter than a distance between a pair of other planes of each of the permanent magnet segments perpendicular to the magnetization direction.

The permanent magnet segments may be sintered magnets expressed by Formula 1 below,

[Formula 1] x%RE-y%B-z%TM-Bal.%Fe,

here, RE may indicate a rare earth element, TM may indicate a transition element, x may be 28-25, y may be 0.5-1.5, and z may be 0-15.

The permanent magnet segments may be NdFeB sintered magnets.

The diffusion material may include a rare earth element.

The diffusion material may be expressed by Formula 2 below,

[Formula 2] RETMX,

here, RE may indicate the rare earth element, TM may indicate a transition element, and X may indicate at least one of hydrogen, oxygen or fluorine.

The diffusion material may include 10 at% or more of the rare earth element.

In accordance with another aspect of the present disclosure, there is provided a method for manufacturing a segmented magnet, the method including preparing a plurality of permanent magnet parent bodies having a constant magnetization direction by magnetizing the permanent magnet parent bodies in a designated direction, diffusing a diffusion material into the prepared permanent magnet parent bodies via a pair of planes thereof opposite each other and parallel to the magnetization direction along grain boundaries so as to form a pair of diffusing surfaces, preparing a permanent magnet assembly by stacking the permanent magnet parent bodies in a line such that the diffusing surfaces of the permanent magnet parent bodies face each other, and segmenting the prepared permanent magnet assembly into a plurality of pieces along planes perpendicular to the magnetization direction.

In the preparing the permanent magnet parent bodies, each of the permanent magnet parent bodies may be formed as a hexahedron having three pairs of planes opposite each other, and a distance between a pair of the diffusing surfaces of each of the permanent magnet parent bodies parallel to the magnetization direction may be shorter than a distance between a pair of other planes of each of the permanent magnet parent bodies perpendicular to the magnetization direction.

In the preparing the permanent magnet parent bodies, the permanent magnet parent bodies may be prepared by compacting magnet powder expressed by Formula 1 below into a compact, and then sintering the compact,

[Formula 1] x%RE-y%B-z%TM-Bal.%Fe,

here, RE may indicate a rare earth element, TM may indicate a transition element, x may be 28-25, y may be 0.5-1.5, and z is 0-15.

In the diffusing the diffusion material into the prepared permanent magnet parent bodies, the diffusion material may be applied to diffusing surfaces formed on each of the prepared permanent magnet parent bodies, and the diffusion material may be diffused into the permanent magnet parent bodies along grain boundaries by heat-treating the permanent magnet parent bodies.

In the diffusing the diffusion material into the prepared permanent magnet parent bodies, the diffusion material may include 10 at% or more of a rare earth element.

In the diffusing the diffusion material into the prepared permanent magnet parent bodies, the diffusion material may be expressed by Formula 2 below,

[Formula 2] RETMX,

here, RE may include the rare earth element, TM may indicate a transition element, and X may indicate at least one of hydrogen, oxygen or fluorine.

The diffusing the diffusion material into the prepared permanent magnet parent bodies may include applying the diffusion material to a pair of the diffusing surfaces formed on each of the prepared permanent magnet parent bodies, and diffusing the diffusion material into the permanent magnet parent bodies along grain boundaries by heat-treating the permanent magnet parent bodies having the diffusion material applied to the diffusing surfaces thereof under a vacuum or inert gas atmosphere.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is a schematic view illustrating a process of manufacturing a conventional segmented magnet;
FIG. 2 is a perspective view of a segmented magnet according to one embodiment of the present disclosure;
FIG. 3 is a schematic view illustrating a method for manufacturing the segmented magnet according to one embodiment of the present disclosure;
FIG. 4 is a view illustrating a permanent magnet parent body for description of specimens used in tests;
FIG. 5A is a front view illustrating a driving motor to which the segmented magnet is applied for description of the driving motor used in a test;
Fig. 5B is a perspective from illustrating the driving motor of Fig. 5A;
FIG. 6A is a graph representing heating values due to eddy current generated by the N-segmented magnets including N segments (N=2, 3, 4, 8);
Fig. 6B is a first graph representing the temperatures of the N-segmented magnets including N segments (N=2, 3, 4, 8) over time; and
Fig. 6C is a second graph representing the temperatures of the N-segmented magnets including N segments (N=2, 3, 4, 8) over time.

### DETAILED DESCRIPTION

Hereinafter, reference will be made in detail to various embodiments of the present disclosure, examples of which are illustrated in the accompanying drawings and described below. While the disclosure will be described in conjunction with exemplary embodiments, it will be understood that the present description is not intended to limit the disclosure to the exemplary embodiments. Wherever possible, the same reference numbers will be used throughout the drawings to refer to the same or like parts.

First, a segmented magnet according to one embodiment of the present disclosure will be described.

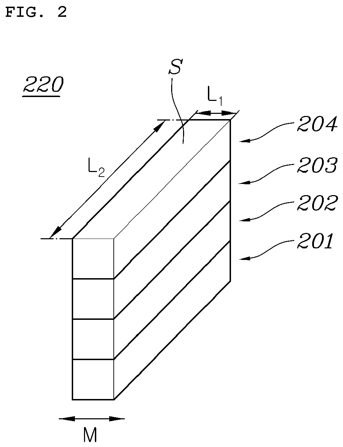

FIG. 2 is a perspective view of the segmented magnet according to one embodiment of the present disclosure.

As shown in FIG. 2, the segmented magnet according to one embodiment of the present disclosure is a segmented magnet 220 formed by stacking permanent magnet segments 201, 202, 203 and 204 in a line.

Here, each of the permanent magnet segments 201, 202, 203 and 204 is formed as a hexahedron having three pairs of planes which are opposite each other. Therefore, diffusing surfaces S, through which a diffusion material is diffused into each of the permanent magnet segments 201, 202, 203 and 204 along grain boundaries, are formed on a pair of planes opposite each other which are parallel to a magnetization direction M, among the planes, i.e., three pairs of planes, of the permanent magnet segments 201, 202, 203 and 204.

Further, the permanent magnet segments 201, 202, 203 and 204 are stacked in a line such that the diffusing surfaces S thereof face each other, and are then bonded.

For example, the segmented magnet 220 may be manufactured by cutting a permanent magnet assembly, acquired by stacking a plurality of permanent magnet parent bodies 200, each of which has diffusing surfaces S formed on a pair of planes thereof opposite each other and parallel to the magnetization direction M, in a line such that the diffusing surfaces S thereof face each other, along planes perpendicular to the magnetization direction M. A method for manufacturing the segmented magnet 220 will be described in detail later.

The length L2 of an axis of each of the permanent magnet segments 201, 202, 203 and 204 perpendicular to the magnetization direction M may be greater than the length L1 of an axis of each of the permanent magnet segments 201, 202, 203 and 204 parallel to the magnetization direction M. Thereby, when the segmented magnet 220 formed by stacking the permanent magnet segments 201, 202, 203 and 204 is applied to a driving motor, the segmented magnet 220 may maintain excellent magnetic properties.

Further, when the segment magnet 220 having a fixed size is provided, as the number of permanent magnet segments which are stacked increases, the distance between the diffusing surfaces S of each of the permanent magnet segments is reduced, and thus, the segmented magnet 220 may maintain more excellent magnetic properties and reduce eddy current loss.

A sintered magnet into which a rare earth element is diffused along grain boundaries may be used as the permanent magnet segments 201, 202, 203 and 204.

For example, the permanent magnet segments 201, 202, 203 and 204 may be sintered magnets expressed by Formula 1 below.

[Formula 1] x%RE-y%B-z%TM-Bal.%Fe

Here, RE indicates a rare earth element, TM indicates a transition element, x is 28-25, y is 0.5-1.5, and z is 0-15.

A NdFeB sintered magnet may be used as the permanent magnet segments 201, 202, 203 and 204.

Further, the diffusion material may include a rare earth element in order to realize grain boundary diffusion of the rare earth element. Particularly, the diffusion material may include 10 at% or more of a rare earth element.

For example, the diffusion material may be expressed by Formula 2 below.

[Formula 2] RETMX

Here, RE indicates a rare earth element, TM indicates a transition element, and X indicates at least one of hydrogen, oxygen or fluorine.

Although this embodiment describes the permanent magnet segments 201, 202, 203 and 204 and the diffusion material as being expressed by the above Formula 1 and Formula 2, the permanent magnet segments 201, 202, 203 and 204 and the diffusion material are not limited to the stated components and the contents thereof, and may include various other components which may improve the magnetic properties of a permanent magnet, and various contents thereof.

Hereinafter, a method for manufacturing the segmented magnet according to the present disclosure will be described with reference to the accompanying drawings.

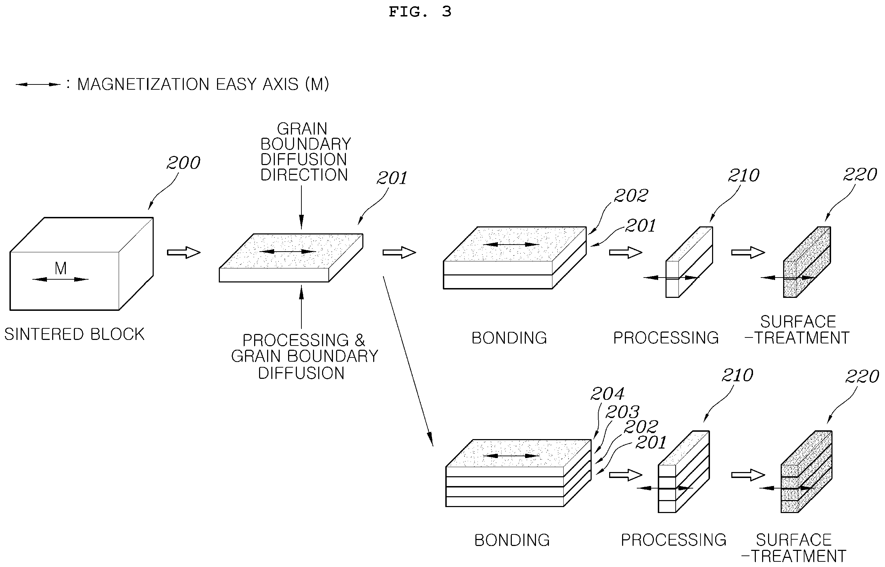

FIG. 3 is a schematic view illustrating the method for manufacturing the segmented magnet according to one embodiment of the present disclosure.

As shown in FIG. 3, the method for manufacturing the segmented magnet according to one embodiment of the present disclosure includes preparing a plurality of permanent magnet parent bodies 200 having a constant magnetization direction by magnetizing the permanent magnet parent bodies 200 in a designated direction, diffusing a diffusion material into the prepared permanent magnet parent bodies 200 via a pair of planes thereof opposite each other and parallel to the magnetization direction M, along grain boundaries so as to form a pair of diffusing surfaces S, preparing a permanent magnet assembly by stacking the permanent magnet parent bodies 200 in a line such that the diffusing surfaces S of the permanent magnet parent bodies 200 face each other, and segmenting the prepared permanent magnet assembly into a plurality of pieces along planes perpendicular to the magnetization direction M.

In the preparation of the permanent magnet parent bodies 200, the permanent magnet parent bodies 200 are prepared using magnet powder expressed by Formula 1 below.

[Formula 1] x%RE-y%B-z%TM-Bal.%Fe

Here, RE indicates a rare earth element, TM indicates a transition element, x is 28-25, y is 0.5-1.5, and z is 0-15.

For example, the magnet powder is compacted into a hexahedral compact having three pairs of planes which are opposite each other. Thereafter, the permanent magnet parent body 200 is prepared by sintering the compact.

Here, the permanent magnet parent body 200 has a magnetization direction M parallel to a magnetization easy axis by magnetizing the compact along the magnetization easy axis.

Further, the permanent magnet parent body 200 is formed in a hexahedral shape such that a distance between a pair of the diffusing surfaces S of the permanent magnet parent body 200 parallel to the magnetization direction M is shorter than a distance between the planes of the permanent magnet parent body 200 perpendicular to the magnetization direction M. As such, the permanent magnet parent body 200 may be configured to have a short distance between two planes parallel to the magnetization direction M, which serve as the diffusion surfaces S, thus being capable of maintaining excellent magnet properties.

When these permanent magnet parent bodies 200 are prepared, the diffusion material is diffused into the permanent magnet parent bodies 200 along grain boundaries.

In the diffusion of the diffusion material, the diffusion material is applied to the diffusing surfaces S formed on the permanent magnet parent bodies 200, and is diffused into the prepared permanent magnet parent bodies 200 along grain boundaries by performing heat treatment.

For example, the diffusion of the diffusion material may include applying the diffusion material to a pair of the diffusing surfaces S formed on each of the prepared permanent magnet parent bodies 200, and diffusing the diffusion material into the permanent magnet parent bodies 200 along grain boundaries by heat-treating the permanent magnet parent bodies 200 under a vacuum or inert gas atmosphere.

The diffusion material used in the application process includes a rare earth element, as described above. Particularly, the diffusion material may include 10 at% or more of a rare earth element.

For example, the diffusion material may be expressed by Formula 2 below.

[Formula 2] RETMX

Here, RE indicates a rare earth element, TM indicates a transition element, and X indicates at least one of hydrogen, oxygen or fluorine.

When grain boundary diffusion of the diffusion material through a pair of diffusion surfaces S of each of the permanent magnet parent bodies 200 parallel to the magnetization direction M is completed, the permanent magnet parent bodies 200 are stacked and bonded.

In the preparation of the permanent magnet assembly, the permanent magnet assembly is prepared by stacking the permanent magnet parent bodies 200 in a line such that the diffusing surfaces S of the permanent magnet parent bodies 200 face each other. Thereafter, the prepared permanent magnet assembly is segmented into a desired number of pieces, and thus, the permanent magnet parent bodies 200 are segmented into the permanent magnet segments 201, 202, 203 and 204.

In the preparation of the permanent magnet assembly, a plurality of the permanent magnet parent bodies 200 may be stacked so as to fit into a desired size of a final segmented magnet 220, and may then be bonded.

Thereby, the permanent magnet assembly may be prepared such that a short distance between the diffusion surfaces S formed on each of the permanent magnet parent bodies 200 is maintained.

When the permanent magnet assembly may be prepared, the permanent magnet assembly is segmented into a plurality of pieces having a desired size.

In the segmentation of the permanent magnet assembly, the permanent magnet assembly is segmented into a plurality of pieces along planes perpendicular to the magnetization direction M.

Thereby, the segmented magnet 210 having a desired size and shape is manufactured.

A surface-treated segmented magnet 220 may be manufactured by finally surface-treating the manufactured segmented magnet 210 in order to achieve desired quality and surface state.

In order to manufacture the segmented magnet 210 having a desired size, a desired number of the permanent magnet parent bodies 200 are stacked and then the acquired permanent magnet assembly is segmented into pieces so as to fit into the desired size and shape of the final segmented magnet 220, and thus, even an n-segmented magnet 220 including n permanent magnet segments may be manufactured through one segmenting process.

Hereinafter, the present disclosure will be described through various tests using comparative examples and test examples.

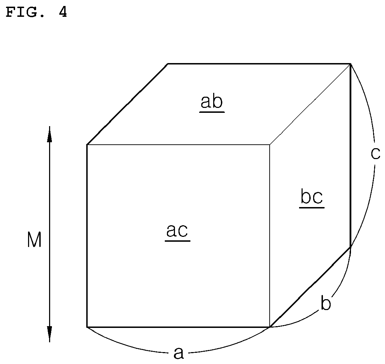

FIG. 4 is a view illustrating a permanent magnet parent body for description of specimens used in the tests.

In the following tests, magnetic properties were measured at a temperature of 20°C according to IEC 60404-5.

### [Test 1]

In this test, sintered magnet bodies having a composition of 31%RE-1%B-2%TM-Bal.%Fe (here, RE indicates a rare earth element and TM indicates a transition element) were manufactured. The sintered magnet bodies were processed into sintered magnets having dimensions of a=7 mm, b=7 mm and c=7 mm, sintered magnets having dimensions of a=7 mm, b=7 mm and c=5 mm, and sintered magnets having dimensions of a=7 mm, b=5 mm and c=7 mm. Here, a direction c is the orientation direction, i.e. the magnetization direction, of an anisotropic magnet.

Further, in order to improve the coercive force of the magnets, the following grain boundary diffusion process was performed on planes (planes ab) perpendicular to the magnetization direction of the magnets and planes (planes ac and planes bc) parallel to the magnetization direction.

The processed magnets were soaked in an alkali degreasing solution and then rubbed with ceramic balls having a size of 2-10 mm so as to remove grease from the surfaces of the magnets, and the magnets were washed with distilled water so as to completely remove the residual degreasing solution.

Thereafter, a slurry-type diffusion material for grain boundary diffusion was prepared by uniformly mixing a Tbhydride compound and alcohol at a weight ratio of 50%:50%, and the prepared diffusion material was sprayed such that the rare earth element included in the diffusion material is uniformly applied to both (two) selected planes of the magnets.

Thereafter, in order to diffuse the rare earth element into the magnets along grain boundaries, the magnets provided with the diffusion material applied thereto were put into a heating furnace, were heated at a heating rate of 1 °C/min, and were maintained at a temperature of 900 °C for 6 hours. Thereby, infiltration, in which the heavy rare earth compound included in the diffusion material is decomposed into the heavy rare earth element and the heavy rare earth element is diffused into the magnets, proceeded. Thereafter, final heat-treatment of the magnets was performed at a temperature of 500 °C for 2 hours.

The remanence (Br) and intrinsic coercive force (Hcj) of the magnets before grain boundary diffusion measured 13.0 kG and 17.0 kOe, respectively. After the magnets in which final grain boundary diffusion was completed were surface-treated so as to remove residual diffusing layers therefrom, the magnetic properties of the magnets were evaluated, and results of the evaluation of the magnetic properties are stated in Table 1 below.

**[Table 1]**

| Classifica tion | Leng th | Amount of applie d diffus ion materi al | Application/dif fusion direction | Br (k G) | Hcj (k Oe) | Thermal demagneti zing factor |
|---|---|---|---|---|---|---|
| Specimen 1-1 | a=b= c | 1.0 wt% | ab+a'b' two planes | 13.8 1 | 29.01 | 1.31 |
| Specimen 1-2 | | 1.0 wt% | ac+a'c' two planes | 13.7 9 | 29.60 | 1.64 |
| Specimen 1-3 | | 1.0 wt% | bc+b'c' two planes | 13.7 8 | 29.23 | 1.44 |
| Specimen 1-4 | a=b> c | 1.0 wt% | ab+a'b' two planes | 13.7 5 | 32.39 | 0.54 |
| Specimen 1-5 | | 1.0 wt% | ac+a'c' two planes | 13.8 0 | 29.11 | 1.53 |
| Specimen 1-6 | | 1.0 wt% | bc+b'c' two planes | 13.8 2 | 29.43 | 1.49 |
| Specimen 1-7 | a=c> b | 1.0 wt% | ab+a'b' two planes | 13.8 3 | 29.00 | 1.65 |
| Specimen 1-8 | | 1.0 wt% | ac+a'c' two planes | 13.7 6 | 31.27 | 0.79 |
| Specimen 1-9 | | 1.0 wt% | bc+b'c' two planes | 13.7 9 | 29.08 | 1.39 |

As set forth in Table 1 above, in a grain boundary diffusion method suggested in the present disclosure, the diffusion material is selectively and intensively diffused in a direction in which a diffusion distance is relatively short.

It may be confirmed that, in specimens 1-1 to 1-3, in which the lengths thereof in directions perpendicular to the magnetization direction were the same as the length thereof in the magnetization direction, the improvement degrees of coercive force and the irreversible thermal demagnetizing factors of specimens 1-1 to 1-3 after grain boundary diffusion were almost equivalent.

In specimens 1-4 to 1-6, in which the length thereof in the magnetization direction was reduced to 5 mm, when the diffusion material was applied to the planes ab, the diffusion depth of the diffusion material was lowest and, in this case, the magnetic properties were most excellent and the irreversible thermal demagnetizing factor was lowest.

Further, in specimens 1-7 to 1-9, in which the lengths thereof in the direction perpendicular to the magnetization direction were reduced to 5 mm, when the diffusion material was applied to the planes ac, the diffusion depth of the diffusion material was lowest and, in this case, the magnetic properties were most excellent and the irreversible thermal demagnetizing factor was lowest.

### [Test 2]

In this test, sintered magnet bodies having a composition of Xwt%RE-Ywt%B-Zwt%TM-Bal.wt%Fe (here, RE indicates a rare earth element, TM indicates a transition element, X is 28-25, Y is 0.5-1.5, and Z is 0-15) were manufactured, the sintered magnet bodies were processed into sintered magnets having dimensions of a=45 mm, b=5 mm and c=6 mm (specimens 2-1 and 2-2), application and grain boundary diffusion processes were performed on the planes ab of the sintered magnets of specimen 2-1 perpendicular to the magnetization direction of the magnets, and the application and grain boundary diffusion processes were performed on the planes ac of the sintered magnets of specimen 2-2 parallel to the magnetization direction of the magnets.

The grain boundary diffusion process was performed under the same conditions as in Test 1.

After the grain boundary diffusion was completed, three sintered magnets of each of specimen 2-1 and specimen 2-2 were uniformly bonded using an epoxy bond applied to the planes ac thereof so as to have the same size as the sintered magnet body having dimensions of a=45 mm, b=15 mm and c=6 mm.

Here, the residual magnetic flux density (Br) and intrinsic coercive force (Hcj) of the magnets before grain boundary diffusion measured 13.5 kG and 18.0 kOe, respectively. After the magnets in which final grain boundary diffusion and bonding were completed were surface-treated so as to remove residual diffusing layers therefrom, the magnetic properties of the magnets were evaluated, and results of the evaluation are stated in Table 2 below.

As set forth in the results of the evaluation of the magnetic properties, specimen 2-2 having a shorter diffusion distance than specimen 2-1 was evaluated to have intrinsic coercive force (Hcj) higher than that of specimen 2-1 by about 0.8 kOe.

### [Test 3]

In test 3, sintered magnet bodies having a composition of Xwt%RE-Ywt%B-Zwt%TM-Bal.wt%Fe (here, RE indicates a rare earth element, TM indicates a transition element, X is 28-25, Y is 0.5-1.5, and Z is 0-15) were manufactured, the sintered magnet bodies were processed into sintered magnets having dimensions of a=37.5 mm, b=3.13 mm and c=5 mm (specimens 2-3 and 2-4), application and grain boundary diffusion processes were performed on the planes ab of the sintered magnets of specimen 2-3 perpendicular to the magnetization direction of the magnets, and the application and grain boundary diffusion processes were performed on the planes ac of the sintered magnets of specimen 2-4 parallel to the magnetization direction of the magnets.

The grain boundary diffusion process was performed under the same conditions as in Test 1.

After the grain boundary diffusion was completed, four sintered magnets of each of specimen 2-3 and specimen 2-4 were uniformly bonded using an epoxy bond applied to the planes ac thereof so as to have the same size as the sintered magnet body having dimensions of a=37.5 mm, b=12.5 mm and c=5 mm.

Here, the residual magnetic flux density (Br) and intrinsic coercive force (Hcj) of the magnets before grain boundary diffusion measured 13.5 kG and 18.0 kOe, respectively. After the magnets in which final grain boundary diffusion and bonding were completed were surface-treated so as to remove residual diffusing layers therefrom, the magnetic properties of the magnets were evaluated, and results of the evaluation are stated in Table 2 below.

As set forth in the results of the evaluation of the magnetic properties, specimen 2-4 having a shorter diffusion distance than specimen 2-3 was evaluated to have intrinsic coercive force (Hcj) higher than that of specimen 2-3 by about 2.3 kOe. Further, the result of the evaluation of the magnetic properties shows that the improvement degree of coercive force of specimen 2-4 is higher than the improvement degree of coercive force of specimen 2-2, and it may be determined that the reason is that, as the number of segments of a sintered magnet body increases, a diffusion distance is shortened.

### [Test 4]

In test 4, sintered magnet bodies having a composition of Xwt%RE-Ywt%B-Zwt%TM-Bal.wt%Fe (here, RE indicates a rare earth element, TM indicates a transition element, X is 28-25, Y is 0.5-1.5, and Z is 0-15) were manufactured, the sintered magnet bodies were processed into sintered magnets having dimensions of a=45 mm, b=2 mm and c=6 mm (specimens 2-5 and 2-6), application and grain boundary diffusion processes were performed on the planes ab of the sintered magnets of specimen 2-5 perpendicular to the magnetization direction of the magnets, and the application and grain boundary diffusion processes were performed on the planes ac of the sintered magnets of specimen 2-6 parallel to the magnetization direction of the magnets.

The grain boundary diffusion process was performed under the same conditions as in Test 1.

After the grain boundary diffusion was completed, eight sintered magnets of each of specimen 2-5 and specimen 2-6 were uniformly bonded using an epoxy bond applied to the planes ac thereof so as to have the same size as the sintered magnet body having dimensions of a=45 mm, b=16 mm and c=6 mm.

Here, the residual magnetic flux density (Br) and intrinsic coercive force (Hcj) of the magnets before grain boundary diffusion measured 13.5 kG and 18.0 kOe, respectively. After the magnets in which final grain boundary diffusion and bonding were completed were surface-treated so as to remove residual diffusing layers therefrom, the magnetic properties of the magnets were evaluated, and results of the evaluation are stated in Table 2 below.

As set forth in the results of the evaluation of the magnetic properties, specimen 2-6 having a shorter diffusion distance than specimen 2-5 was evaluated to have intrinsic coercive force (Hcj) higher than that of specimen 2-5 by about 3.26 kOe.

**[Table 2]**

| Classific ation | Dimensions of magnet | | | Diffus ion direct ion | Segmentatio n and bonding | Br(k G) | Hcj (Ko e) | BHma x (MGO e) |
|---|---|---|---|---|---|---|---|---|
| | a (m m) | b(m m) | c(m m) | | | | | |
| Specimen 2-1 | 45 | 15 | 6 | ab+a'b ' two planes | 0 (3 segments) | 13.1 5 | 28. 36 | 42.6 3 |
| Specimen 2-2 | 45 | 5 | 6 | ac+a'c ' two planes | 0 (3 segments) | 13.1 2 | 29. 16 | 42.0 6 |
| Specimen 2-3 | 37. 5 | 12. 5 | 5 | ab+a'b ' two planes | 0 (4 segments) | 13.1 7 | 29. 28 | 42.8 1 |
| Specimen 2-4 | 37. 5 | 3.1 3 | 5 | ac+a'c ' two planes | 0 (4 segments) | 13.1 1 | 31. 54 | 42.2 7 |
| Specimen 2-5 | 45 | 16 | 6 | ab+a'b ' two planes | 0 (8 segments) | 13.1 6 | 24. 17 | 42.4 4 |
| Specimen 2-6 | 45 | 2 | 6 | ac+a'c ' two planes | 0 (8 segments) | 13.1 0 | 27. 43 | 42.0 6 |

### [Test 5]

In Test 5, a temperature transition simulation of a motor, to which the segmented magnet suggested in the present disclosure is applied, was performed.

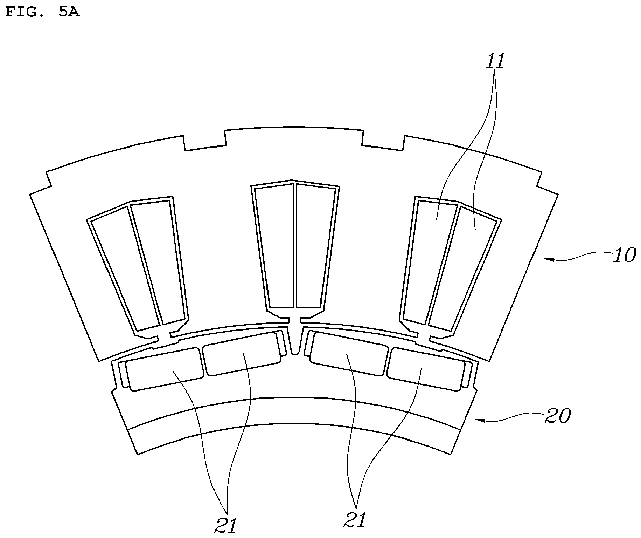

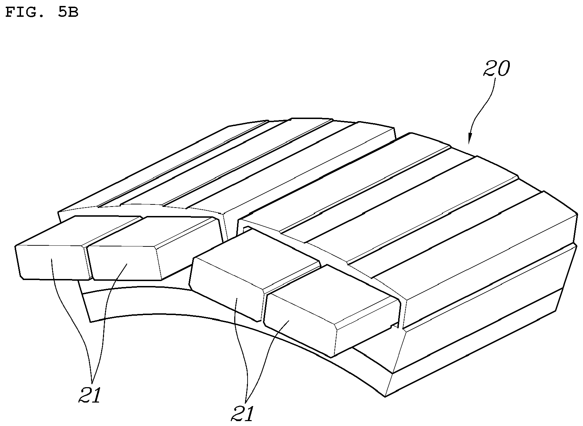

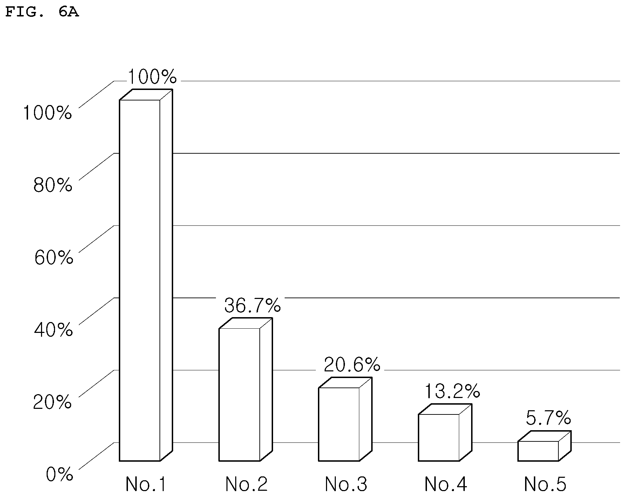

FIGs. 5A and 5B are views illustrating a driving motor to which the segmented magnet is applied for description of the driving motor used in this test, and FIGs. 6A to 6C are graphs representing results of the test using various specimens.

As shown in FIGs. 5A and 5B, when a driving motor for hybrid electric vehicles, in which coils 11 are applied to a stator 10 and segmented magnets 21 according to the present disclosure are applied to a rotor 20, was operated, temperature transition was simulated.

Here, the segmented magnets 21 inserted into the rotor 20 have dimensions of a=45 mm, b=15 mm and c=6 mm.

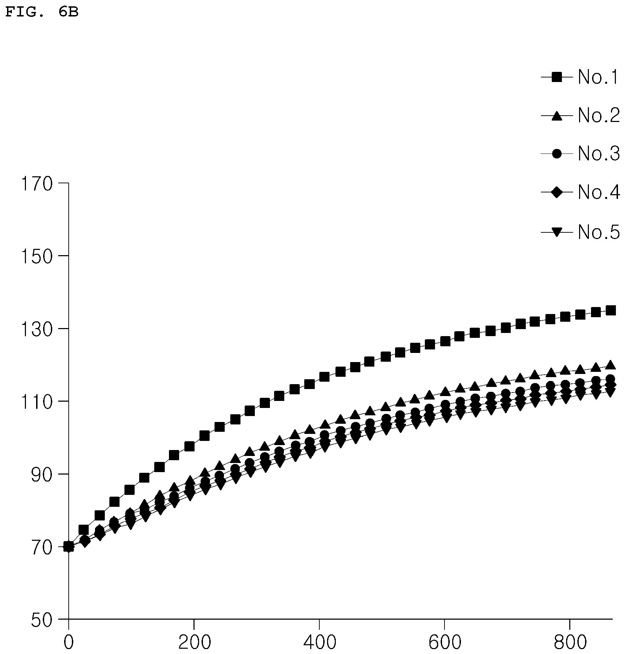

Further, among magnet specimens shown in FIGs. 6A and 6B, No.1 is a non-segmented magnet specimen, No.2 is a 2-segmented magnet specimen, No.3 is a 3-segmented magnet specimen, No.4 is a 4-segmented magnet specimen, and No.5 is an 8-segmented magnet specimen.

FIG. 6A is a graph representing heating values due to eddy current generated by the N-segmented magnets including N segments (N=2, 3, 4, 8).

It may be confirmed from FIG. 6A that, as the number of the segments of the segmented magnet increases, the heating value is reduced.

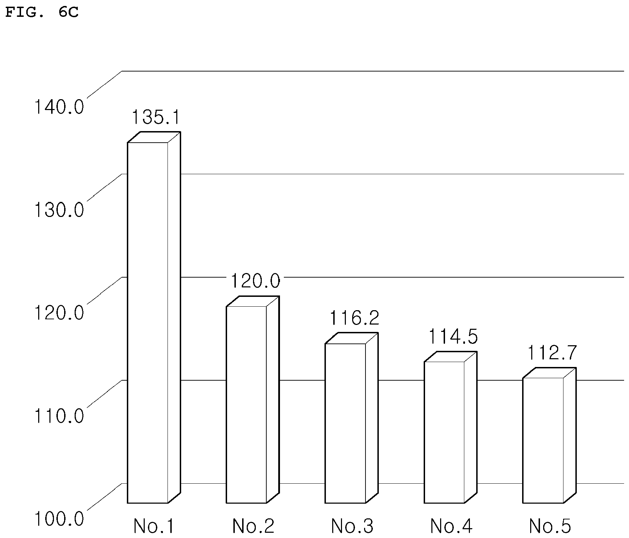

Further, FIGs. 6B and 6C are graphs representing the temperatures of the N-segmented magnets including N segments (N=2, 3, 4, 8) over time.

It may be confirmed from FIGs. 6B and 6C that, as the number of the segments of the segmented magnet increases, a temperature change is small.

As is apparent from the above description, in the segmented magnet and the method for manufacturing the same according to one embodiment of the present disclosure, applied planes of a diffusion material for grain boundary diffusion may be adjusted depending on the magnetization direction of the segmented magnet, thereby simplifying the manufacturing process of the segmented magnet while reducing eddy current loss even though a fixed amount of the diffusion material is diffused into the same magnet body along grain boundaries.

Because the segmented magnet capable of reducing eddy current loss may be applied to a driving motor, a temperature rise during operation of the driving motor may be suppressed, thereby being capable of increasing the operating efficiency of the driving motor even though a magnet having relatively low coercive force is used.

Although the preferred embodiments of the present disclosure have been disclosed for illustrative purposes, those skilled in the art will appreciate that various modifications, additions and substitutions are possible, without departing from the scope and spirit of the disclosure as disclosed in the accompanying claims.

## Claims

1. A segmented magnet formed by stacking a plurality of permanent magnet segments in a line, wherein:
diffusing surfaces configured such that a diffusion material is diffused thereinto along grain boundaries are formed on a pair of planes of each of permanent magnet segments opposite each other and parallel to a magnetization direction; and
the permanent magnet segments are stacked in the line and bonded such that the diffusing surfaces thereof face each other.

2. The segmented magnet according to claim 1, wherein the segment magnet is formed by cutting a permanent magnet assembly, acquired by stacking a plurality of permanent magnet parent bodies, each having the diffusing surfaces on a pair of planes thereof opposite each other and parallel to the magnetization direction, in a line such that the diffusing surfaces thereof face each other, along planes perpendicular to the magnetization direction.

3. The segmented magnet according to claim 1, wherein a distance between a pair of the diffusing surfaces of each of the permanent magnet segments parallel to the magnetization direction is shorter than a distance between a pair of other planes of each of the permanent magnet segments perpendicular to the magnetization direction.

4. The segmented magnet according to claim 1, wherein the permanent magnet segments are sintered magnets expressed by Formula 1 below,
[Formula 1] x%RE-y%B-z%TM-Bal.%Fe,
wherein RE indicates a rare earth element, TM indicates a transition element, x is 28-25, y is 0.5-1.5, and z is 0-15.

5. The segmented magnet according to claim 4, wherein the permanent magnet segments are NdFeB sintered magnets.

6. The segmented magnet according to claim 1, wherein the diffusion material comprises a rare earth element.

7. The segmented magnet according to claim 6, wherein the diffusion material is expressed by Formula 2 below,
[Formula 2] RETMX,
wherein RE indicates the rare earth element, TM indicates a transition element, and X indicates at least one of hydrogen, oxygen or fluorine.

8. The segmented magnet according to claim 7, wherein the diffusion material comprises 10 at% or more of the rare earth element.

9. A method for manufacturing a segmented magnet, the method comprising:
preparing a plurality of permanent magnet parent bodies having a constant magnetization direction by magnetizing the permanent magnet parent bodies in a designated direction;
diffusing a diffusion material into the prepared permanent magnet parent bodies via a pair of planes thereof opposite each other and parallel to the magnetization direction along grain boundaries so as to form a pair of diffusing surfaces;
preparing a permanent magnet assembly by stacking the permanent magnet parent bodies in a line such that the diffusing surfaces of the permanent magnet parent bodies face each other; and
segmenting the prepared permanent magnet assembly into a plurality of pieces along planes perpendicular to the magnetization direction.

10. The method according to claim 9, wherein, in the preparing the permanent magnet parent bodies, each of the permanent magnet parent bodies is formed as a hexahedron having three pairs of planes opposite each other, and a distance between a pair of the diffusing surfaces of each of the permanent magnet parent bodies parallel to the magnetization direction is shorter than a distance between a pair of other planes of each of the permanent magnet parent bodies perpendicular to the magnetization direction.

11. The method according to claim 9, wherein, in the preparing the permanent magnet parent bodies, the permanent magnet parent bodies are prepared by compacting magnet powder expressed by Formula 1 below into a compact, and then sintering the compact,
[Formula 1] x%RE-y%B-z%TM-Bal.%Fe,
wherein RE indicates a rare earth element, TM indicates a transition element, x is 28-25, y is 0.5-1.5, and z is 0-15.

12. The method according to claim 9, wherein, in the diffusing the diffusion material into the prepared permanent magnet parent bodies, the diffusion material is applied to diffusing surfaces formed on each of the prepared permanent magnet parent bodies, and the diffusion material is diffused into the permanent magnet parent bodies along grain boundaries by heat-treating the permanent magnet parent bodies.

13. The method according to claim 9, wherein, in the diffusing the diffusion material into the prepared permanent magnet parent bodies, the diffusion material comprises 10 at% or more of a rare earth element.

14. The method according to claim 13, wherein, in the diffusing the diffusion material into the prepared permanent magnet parent bodies, the diffusion material is expressed by Formula 2 below,
[Formula 2] RETMX,
wherein RE indicates the rare earth element, TM indicates a transition element, and X indicates at least one of hydrogen, oxygen or fluorine.

15. The method according to claim 9, wherein the diffusing the diffusion material into the prepared permanent magnet parent bodies comprises:
applying the diffusion material to a pair of the diffusing surfaces formed on each of the prepared permanent magnet parent bodies; and
diffusing the diffusion material into the permanent magnet parent bodies along grain boundaries by heat-treating the permanent magnet parent bodies having the diffusion material applied to the diffusing surfaces thereof under a vacuum or inert gas atmosphere.
